# EUROPÄISCHE PATENTSCHRIFT

(11) **EP 4 166 625 B1**
(45) Veröffentlichungstag und Bekanntmachung des Hinweises auf die Patenterteilung: **05.08.2026**
(21) Anmeldenummer: 22202178.4
(22) Anmeldetag: 18.10.2022
(51) Int. Cl.: C09K 5/10, C09K 5/20

(54) **LÖSLICHKEITSVERRINGERUNG VON ALKANEN**
SOLUBILITY REDUCTION OF ALKANES
RÉDUCTION DE LA SOLUBILITÉ D'ALCANES

(30) Priorität: 18.10.2021 DE 102021126949
(43) Veröffentlichungstag der Anmeldung: 19.04.2023
(73) Patentinhaber: Vaillant GmbH, 42859 Remscheid NRW (DE)
(72) Erfinder: Wohlfeil, Arnold, 42799 Leichlingen (DE)
(74) Vertreter: Popp, Carsten

(56) Entgegenhaltungen:
- EP-A1- 0 381 656
- EP-A2- 2 484 741
- CN-A- 108 611 062
- DE-A1- 102013 224 211
- DE-A1- 102019 114 751
- DE-T2- 60 015 947

## Beschreibung

Die Erfindung betrifft die Entfernung alkan- und/oder alkenhaltiger entzündlicher Gase in einem Heizungskreislauf, im Folgenden als Wärmeträgerfluidkreislauf bezeichnet, eines Wärmepumpensystems.

Einerseits ist bekannt, dass Heizkreisläufe gelegentlich entlüftet werden müssen, da sich Luft im System ansammeln kann. Meist geschieht dies durch Undichtigkeiten an erhöhten Stellen im Heizkreislauf, bei denen eine Undichtigkeit in Verbindung mit Unterdruck zum Ansaugen von Luft in den Wasserkreislauf führt. In manchen Fällen handelt es sich auch um Luft, die in Nachfüllwasser gelöst ist und die bei dessen Erwärmung freigesetzt wird. Dasselbe gilt für Sole-Split-Anlagen, bei denen sich Sole im Heizkreis befindet und auch für Klimaanlagen. Je nachdem, welche Zwecke ein solcher Wärmeträgerfluidkreislauf erfüllen oder welche Umgebungsbedingungen er zu bewältigen hat, können neben dem eigentlichen Wärmeträger, meistens Wasser, auch Additive dem Wärmeträgerfluidkreislauf hinzugesetzt werden. Hierbei handelt es sich meist um Frostschutzmittel oder Korrosionsschutzmittel.

Andererseits werden inzwischen in Wärmepumpen und in Kühl- und Gefrieranlagen entzündliche Kältemittel als Arbeitsfluide verwendet, die den Vorteil haben, bei ihrer versehentlichen Freisetzung weder das Klima noch die Ozonschicht zu schädigen. Eine solche versehentliche Freisetzung ist aufgrund deren Brennbarkeit aber möglichst zu vermeiden. In Kältekreisen, in denen solche Arbeitsfluide eingesetzt werden, können solche unbeabsichtigten Freisetzungen über die Wärmetauscher passieren, die als Verflüssiger und Verdampfer zum Einsatz kommen und die mit dem Wärmeträgerfluidkreislauf, also dem Heizungskreislauf oder Kühlsolekreislauf, über ihre Austauschflächen verbunden sind. Im Unterschied zu herkömmlichen Gasbrennkesseln steht das Arbeitsfluid im Kältekreis unter einem höheren Druck als das Wärmeträgerfluid im Heizkreis oder Kühlsolekreis, es könnte also bei Leckagen leicht in den unter geringerem Druck stehenden Wärmeträgerfluidkreislauf gelangen.

Um dies so weit wie möglich zu verhindern, werden im herkömmlichen Stand der Technik teure doppelwandige Wärmetauscher verwendet, wie sie beispielsweise in den Patentschriften DE 11 2019 001 344 T5, DE 11 2019 001 350 T5 und DE 11 2019 001 351 T5 für Wärmepumpen beschrieben sind, die das Arbeitsfluid R290 gegen eine Wasser-Propylenglykol-Sole als Wärmeträgerfluid führen. Neben dem hohen Preis führt dieser Einsatz aber zu Effizienzverlusten, da die Materialien, wie beispielsweise etwa Edelstahl, Wärme schlecht leiten und der dünne Luftspalt zwischen den Wärmetauscherflächen wie eine Isolierung wirkt. Praktisch bedeutet dies, dass höhere Temperaturdifferenzen in den Wärmetauschern eingestellt werden müssen, was den Wirkungsgrad von Wärmepumpen herabsetzt.

Solche gasförmigen Bestandteile, die trotzdem über Leckagen in den Wärmeträgerfluidkreislauf gelangen, können mittels Gasabscheidern abgeschieden werden, es verbleiben aber gelöste und sehr feinblasige Gasbestandteile. Diese können bei Temperatur- und Druckänderungen Probleme bereiten, indem sie an ungünstigen Stellen im Wärmeträgerfluidkreislauf ausgasen, wenn sich ihre Löslichkeit temperaturbedingt ändert. Dies betrifft vor allem das inzwischen häufig eingesetzte Propan im Kältemittel R290, aber auch Isobutan im Kältemittel R600a, n-Butan in R600, Propylen in R1270 sowie weitere Alkane.

Als Frostschutzmittel wird in wässrigen Wärmeträgerfluidkreisläufen bevorzugt Propylenglykol zugesetzt. Dies hat den Vorteil, dass es mit Wasser beliebig mischbar ist und im Falle von Havarien gegenüber Mensch und Umwelt ungiftig ist. Auch Ethylenglykol wird häufig verwendet. Ein Nachteil dieser Frostschutzmittel ist aber, dass sich die Löslichkeit von R290 sowie anderen Alkanen erheblich vergrößert. Außerdem erhöhen beide Glykole die Oberfächenspannung, was bei der Abscheidung von Gasblasen zum Schäumen führen kann. Um das Schäumen zu verhindern, werden industriell üblicherweise Entschäumer eingesetzt, hierbei handelt es sich um im schäumenden Medium unlösliche oberflächenaktive Stoffe.

Zur Vermeidung von Korrosion wird üblicherweise ein Korrosionsinhibitor eingesetzt.

Moderne Wärmepumpen können auch umschaltbar zwischen Heizbetrieb und Klimabetrieb ausgelegt werden und außerdem Warmwasser bereiten. Dies erhöht die im System auftretenden Temperaturänderungen noch weiter. Weitere Probleme können sich daraus ergeben, dass viele Wärmepumpen nicht ganzjährig in Betrieb sind.

Es soll daher möglichst verhindert werden, dass das Arbeitsfluid im Wärmeträgerfluid in Lösung geht. Dann kann es bei Temperaturschwankungen auch nicht an ungünstigen Stellen ausgasen, sondern an definierten Stellen abgeschieden und unschädlich gemacht werden. Da Alkane unpolar sind, werden der Heizsole oder dem Heizungswasser polare Stoffe hinzugefügt. Diese führen dazu, dass die ohnehin schlecht löslichen Alkane praktisch unlöslich werden und, wenn sie leckagebedingt aus dem Arbeitsfluidkreislauf in den Wärmeträgerfluidkreislauf gelangen, als Gasblasen gut an einer günstigen Stelle abgeschieden werden können.

Die Zugabe der polaren Stoffe soll dabei so unkompliziert erfolgen können wir die Zugabe üblicher Korrosionsinhibitoren, vorzugsweise nur alle paar Jahre im Rahmen von Wartungsarbeiten. Die Abscheidung von Gasblasen soll vorzugsweise mithilfe üblicher automatischer Gasabscheider erfolgen, die jedoch einen direkten Ablass ins Freie benötigen, z.B. über Dach, wenn die Entgasung am höchsten Punkt des Leitungssystems erfolgen kann.

Reines Wasser löst Alkane bekanntlich sehr schlecht, das Arbeitsfluid R290 - Propan - wird aber bei höheren Drücken und niedriger Temperatur in Wasser vergleichsweise gut gelöst. Kommt auch noch Glykol hinzu, üblich sind als Frostschutzmittel Propylenglykol und Ethylenglykol, steigt die Löslichkeit im Arbeitsfluid weiter an. Die Kombination von Propan bzw. R290 als Arbeitsfluid für Kältemaschinen und Glykol als Arbeitsfluid ist bereits gut bekannt. In der Druckschrift "Frank Hillerns, Thermophysikalische Eigenschaften und Korrosionsverhalten von Kälteträgern, DIE KÄLTE Klimatechnik 10/1999" wird das Verhalten solcher Solen sowie möglicher Alternativen ausführlich beschrieben. Als Alternativen werden vor allem Kälteträger auf der Basis organischer Salze auf Acetat- bzw. Formiatbasis vorgestellt. Kälteträger und notwendige Korrosionsinhibitoren dürfen nicht chemisch miteinander reagieren. Die verfügbaren Kältemittelkonzentrate enthalten auch Härtestabilisatoren, Entschäumer und ggf. Farbstoffe. Auch hier sind chemische Reaktionen zu vermeiden. Eine detaillierte Darstellung findet sich hierzu auch in der EP 897 417 B1.

Die EP 381 656 A1beschreibt ein Vereisungsschutzmittel welches ein alkohollösliches aber wasserunlösliches Öl enthält und für Kühlsysteme in Fahrzeugen eingesetzt wird. Unter anderen wird als alkohollösliches aber wasserunlösliches Öl n-Dodecanol vorgestellt. Die Schrift enthält keinen Hinweis auf ein die Oberflächenspannung herabsetzendes Mittel, welches in Wasser unlöslich ist. Das wäre in einem Kühlsystem eines Fahrzeugs auch sinnlos, denn es tritt dort kein Gas ein, welches mit einem Gasabscheider abzuscheiden wäre und dabei schäumen könnte.

Die DE 600 15 947 T2 betrifft die Anwendung von Submikronteilchen bzw. Nanoteilchen und Carboxylaten mit dem Ziel der Verbesserung der Wärmeübertragungseigenschaften von Wärmeübertragungsfluiden und Frostschutz-Kühlmitteln. Offenbar verbessern metallische Nanoteilchen, die mit Carboxylaten beschichtet sind, den Wärmeübergang und verhalten sich günstig gegenüber Korrosion und lassen auch die Verwendung in Seifen zu. Die DE 600 15 947 T2 schweigt jedoch über das Verhalten bezüglich leckagebedingt in Wärmeträgerfluide eintretenden Kältemitteln wie Kohlenwasserstoffen und schweigt zu Eigenschaften hinsichtlich Oberflächenspannung.

Die EP 2 484 741 A2 betrifft eine Kälte- und Wärmeträgerflüssigkeit auf der Basis von Monoethylenglykol zur Einbringung in den jeweiligen Heiz-, Kühl- und Wärmekreislauf eines Systems. Die Flüssigkeit enthält 10-90% Monoethylenglykol, 10-90% Kaliumacetat und 1-40% Korrosionsinhibitor. Die Flüssigkeit hat den Vorteil, den Temperaturbereich zu erhöhen, in dem ein sicherer Betrieb möglich ist, also auch bei Temperaturen deutlich über dem Siedepunkt von Wasser und unterhalb des Gefrierpunktes und ist mit Wasser mischbar. Die EP 2 484 741 A2 schweigt jedoch über das Verhalten bezüglich leckagebedingt in Wärmeträgerfluide eintretenden Kältemitteln wie Kohlenwasserstoffen und schweigt zu Eigenschaften hinsichtlich Oberflächenspannung. Gasabscheidung ist ebenso wenig vorgesehen wie ein Zusetzen der Flüssigkeit im laufenden Betrieb oder bei Betriebsstörungen. Das Mittel soll vielmehr den laufenden Betrieb ertüchtigen und vorzugsweise in reiner Form genutzt werden.

Die CN 108611062A beschreibt eine Kühlflüssigkeit für Kraftfahrzeuge. Neben anderen korrosionsverhindernden Stoffen werden Grafit-Nanopartikel zugesetzt, deren Braun'sche Bewegung den Wärmetransport erhöht. Weiterhin wird eine ionische Flüssigkeit zugesetzt. Die zugesetzten Stoffe sind für den Dauerbetrieb bestimmt, auch hier ist nicht vorgesehen, dass das Zusetzen nach dem Erkennen einer Leckage zur Austreibung von eingetretenem Kältemittel erfolgen könnte oder sollte. In Abwesenheit einer Gasphase ist auch kein Entschäumer bzw. ein Mittel zur Herabsetzung der Oberflächenspannung vorgesehen.

Die DE 10 2013 224211 A1 beschreibt einen Kältekreis, innerhalb dessen mittels eines Entschäumers bewirkt wird, dass die Geräusche in den Kapillaren des Verdampfers gedämpft werden. Es ist dabei nur ein Primärkreis vorgesehen und kein Sekundärkreis, wie es bei einem Heizkreis der Fall ist. Daher ist auch nicht vorgesehen, einen Sekundärkreis vor Kältemittel zu schützen, welches aus einem unter höherem Druck stehenden Primärkreis stammen könnte. Der Entschäumer-Zusatz soll im Dauerbetrieb versendet werden, ein Zusatz nach einer Betriebsstörung ist nicht vorgesehen.

Die DE 10 2019 114 751 A1 beschreibt einen geeigneten Gasabscheider, den man gut einsetzen könnte, um ein Kältemittel aus einem Wärmeträgerfluidkreislauf auszutreiben, nachdem eine Leckage aufgetreten ist und gelöstes Kältemittel mittels Zusetzen eines Stoffes gemäß Anspruch 1 der Erfindung damit aus dem Wärmeträgerfluidkreislauf entfernt werden kann. Beide ergänzen sich vielmehr gegenseitig in idealer Weise.

Das Schäumen würde beim Entgasen stören, muss also verhindert werden. Hierzu muss die Oberflächenspannung verringert werden. Sofern die erforderlichen Entschäumer nicht schon im Kältemittelkonzentrat mitgeliefert werden, sind silikonhaltige Entschäumer hinzuzufügen. Ansonsten ist es in Haushaltsgeräten bekannt, Entschäumer zum Kältemittel hinzuzugeben. Die DE 10 2013 224 211 A1 beschreibt einen Kältemittelkreis, dem ein grenzflächenaktiver Zusatz hinzugefügt wird. Dies kann ein Tensid oder ein Entschäumer sein, genannt werden Silikonöl, Phosphorsäure und Polyolester. Hierdurch soll beim Phasenwechsel im Kältekreis ein Aufschäumen im Entspannungsventil verhindert werden. Es wird jedoch nicht erklärt, für welche Kältemittel eine Verwendung vorgesehen ist. Hier vorliegend handelt es sich aber um einen Wärmeträgerkreis, in welchen durch eine Leckage Kältemittel eintritt, und nicht um einen Kältekreis.

Die Aufgabe der Erfindung ist daher, zu verhindern, dass sich im Wärmeträgerfluid gasförmige Kohlenwasserstoffe, meist Alkane und/oder Alkene, lösen können und zu bewirken, dass bereits in Lösung befindliche kohlenwasserstoffhaltige Bestandteile des Arbeitsfluids in gasförmiger Form daraus austreten. Leckagebedingt in den Wärmeträgerfluidkreislauf eintretendes Kältemittel soll sich vollständig mittels eines Gasabscheiders abscheiden lassen können.

Die Erfindung löst die Aufgabe durch ein entsprechendes Verfahren zur Verringerung der Löslichkeit von in Wärmeträgerfluid gelösten Alkanen, wobei das Wärmeträgerfluid eine Mischung aus Wasser, Frostschutzmittel und Korrosionsinhibitoren ist, indem dem Wärmeträgerfluid ein polares Mittel zugesetzt wird, welches in Wasser löslich ist, und dass dem Wärmeträgerfluid ein weiteres Mittel zugesetzt wird, welches in Wasser unlöslich ist und welches die Oberflächenspannung herabsetzt und das Kältemittel mittels eines Gasabscheiders abgeschieden wird. Neben Silikonöl ist hier Polyoxyethylen geeignet.

In einer Ausgestaltung des Verfahrens wird vorgesehen, dass das zugesetzte polare Mittel ein Salz ist aus der Gruppe KCl, NaCl, NaBr und NaNO₃. oder aus Mischungen daraus. In einer weiteren Ausgestaltung des Verfahrens wird vorgesehen, dass das Salz die ionische Flüssigkeit [P₆₆₆₁₄]Cl ist.

In einer weiteren Ausgestaltung des Verfahrens wird vorgesehen, dass das zugesetzte polare Mittel polare Nanopartikel enthält. Hierzu ist bevorzugt vorgesehen, dass es sich bei den Nanopartikeln um Januspartikel handelt, deren einer funktioneller Teil eine Polyethylengruppe ist, die mit Thiolen verbunden ist.

In einer weiteren Ausgestaltung des Verfahrens wird vorgesehen, dass im Wärmeträgerfluidkreislauf eine Entgasungsvorrichtung vorgesehen wird, die ins Freie entlüftet.

## Patentansprüche

1. Verfahren zur Verringerung der Löslichkeit von in Wärmeträgerfluid gelösten Kohlenwasserstoffen, die leckagebedingt als Kältemittel in den Wärmeträgerfluidkreislauf eingetreten sind, wobei das Wärmeträgerfluid eine Mischung aus Wasser, Frostschutzmittel und Korrosionsinhibitoren ist, **dadurch gekennzeichnet, dass** dem Wärmeträgerfluid ein polares Mittel zugesetzt wird, welches in Wasser löslich ist und ein weiteres Mittel zugesetzt wird, welches in Wasser unlöslich ist und welches die Oberflächenspannung herabsetzt und das Kältemittel mittels eines Gasabscheiders abgeschieden wird.

2. Verfahren nach Anspruch 1, **dadurch gekennzeichnet, dass** das in Wasser unlösliche Mittel zur Herabsetzung der Oberflächenspannung Silikonöl oder Polyoxyethylen ist.

3. Verfahren nach Anspruch 1, **dadurch gekennzeichnet, dass** das zugesetzte polare Mittel ein Salz ist aus der Gruppe KCl, NaCl, NaBr und NaNO₃. oder aus Mischungen daraus.

4. Verfahren nach Anspruch 1, **dadurch gekennzeichnet, dass** das zugesetzte polare Mittel die ionische Flüssigkeit [P₆₆₆₁₄]Cl ist.

5. Verfahren nach Anspruch 1, **dadurch gekennzeichnet, dass** das zugesetzte polare Mittel polare Nanopartikel, vorzugsweise Januspartikel, enthält.

6. Verfahren nach einem der Ansprüche 1 bis 5, **dadurch gekennzeichnet, dass** im Wärmeträgerfluidkreislauf eine Entgasungsvorrichtung vorgesehen wird, die ins Freie entlüftet.

## Claims

1. A method for reducing the solubility of hydrocarbons dissolved in a heat transfer fluid, which have entered the heat transfer fluid circuit as a refrigerant due to a leak, wherein the heat transfer fluid is a mixture of water, antifreeze and corrosion inhibitors, **characterised in that** a polar agent which is soluble in water is added to the heat transfer fluid, and a further agent which is insoluble in water and which reduces the surface tension is added, and the refrigerant is separated by means of a gas separator.

2. A method according to claim 1, **characterised in that** the water-insoluble agent for reducing the surface tension is silicone oil or polyoxyethylene.

3. A method according to claim 1, **characterised in that** the added polar agent is a salt selected from the group consisting of KCI, NaCl, NaBr and _{NaNO₃}, or mixtures thereof.

4. A method according to claim 1, **characterised in that** the added polar agent is the ionic liquid [P₆₆₆₁₄]Cl.

5. A method according to claim 1, **characterised in that** the added polar agent contains polar nanoparticles, preferably Janus particles.

6. A method according to any one of claims 1 to 5, **characterised in that** a degassing device is provided in the heat transfer fluid circuit, which vents to the atmosphere.

## Revendications

1. Procédé de réduction de la solubilité d'hydrocarbures dissous dans un fluide caloporteur, qui ont pénétré dans le circuit de fluide caloporteur en tant que réfrigérant à la suite d'une fuite, dans lequel le fluide caloporteur est un mélange d'eau, d'antigel et d'inhibiteurs de corrosion, **caractérisé en ce que** sont ajoutés au fluide caloporteur un agent polaire, lequel est soluble dans l'eau, et un agent supplémentaire, lequel est insoluble dans l'eau et réduit la tension superficielle, et **en ce que** le réfrigérant est séparé au moyen d'un séparateur de gaz.

2. Procédé selon la revendication 1, **caractérisé en ce que** l'agent insoluble dans l'eau pour la réduction de la tension superficielle est de l'huile de silicone ou du polyoxyéthylène.

3. Procédé selon la revendication 1, **caractérisé en ce que** l'agent polaire ajouté est un sel sélectionné parmi le groupe comprenant KCl, NaCl, NaBr et NaNO₃, ou des mélanges de ceux-ci.

4. Procédé selon la revendication 1, **caractérisé en ce que** l'agent polaire ajouté est le liquide ionique [P₆₆₆₁₄]Cl.

5. Procédé selon la revendication 1, **caractérisé en ce que** l'agent polaire ajouté contient des nanoparticules polaires, de préférence des particules Janus.

6. Procédé selon l'une quelconque des revendications 1 à 5, **caractérisé en ce qu'**un dispositif de dégazage, qui évacue à l'air libre, est prévu dans le circuit de fluide caloporteur.
